Europäisches Patentamt

European Patent Office

Office européen des brevets

(11) Publication number: **0 509 567 A2**

## EUROPEAN PATENT APPLICATION

(21) Application number: **92200805.7**

(22) Date of filing: **20.03.92**

(51) Int. Cl.5: **G06F 1/00**

(30) Priority: **28.03.91 EP 91200737**

(43) Date of publication of application:
**21.10.92 Bulletin 92/43**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Hubert, Gerardus Tarcisius Maria**
**c/o INT. OCTROOIBUREAU B.V., Prof.**
**Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) **Device with protection against access to secure information.**

(57) In a device containing secure information, a monitoring circuit is provided to destroy the secure information when mechanical access to the device is attempted. The device is encapsulated in a piezo electric material, which generates an electric field if a force is exerted upon the encapsulation. This electric field is used to trigger destruction of the secure information.

EP 0 509 567 A2

The invention relates to a device with protection against external access to secure information carried in information carrying means comprised in the device, the information carrying means being contained inside an encapsulation, the encapsulation being coupled to destruction means inside the encapsulation, for, in response to a change in a physical property of the encapsulation, controlling the information carrying means to destroy the secure information.

Such a device is known form the european patent application no 0142013. This publication describes a device in which a read/write memory is erased when a deformation of the encapsulation occurs. The read/write memory contains the secure information which is used internally in the device, but may not become known outside the device. One example of secure information is a decryption key used to decrypt confidential messages that reach the device. By erasing the memory when a deformation of the encapsulation occurs, it is prevented that anyone can access the information in the memory by breaking into the device.

In the known device, the deformation is detected using strain gages (resistors which change their resistance value when they are stretched), comprised in different parts of the encapsulation, these strain gages being connected in a wheatstone bridge configuration for detecting a change in resistance of the strain gages which indicates that the encapsulation is being deformed.

The published device with protection against access to secure information has the disadvantage that the strain gages require an active detection circuit. This detection circuit draws supply current even if the device is not used. Furthermore the detection circuit has to be quite sensitive to detect access to even small parts of the encapsulation. Moreover, strain gages have to be carefully distributed throughout encapsulation, which therefore needs careful assembly.

Amongst others, it is an object of the invention to provide a device with protection against access to secure information which is requires only a simplified detection circuit.

The device with protection against access to secure information realizes this object, because it is characterized in that the encapsulation contains a piezo electric material, the physical property being an electric field across said piezoelectric material. When stress, such as a compressive force, is applied to a Piezo electric material, it produces a electric field. Thus when force is applied to the encapsulation, for example by placing a drill upon it, a voltage which often reaches many volts can be produced. Such voltages may even be used to trigger some circuit to perform the destruction, or the voltage itself may even be used directly to perform the destruction.

Piezo electric materials offer the additional advantage that they are pyroelectric, that is, they produce changes in the electric field upon changes in temperature; this offers protection against external access using thermal means such as, for example, lasers. Moreover, since piezo electric materials are available as sheet material or as ceramics, they are easy to use as encapsulation material.

An embodiment of the device according to the invention is characterized, in that the encapsulation comprises at least two layers of sandwich each comprising two electrodes with the piezoelectric material in between, the information carrying means and the destruction means being contained between the two layers of sandwich. The sandwich material provides a convenient starting material for the encapsulation; furthermore it makes the encapsulation sensitive to deformation anywhere in the piezoelectric layer.

A further embodiment of the device according to the invention is characterized in that inside the encapsulation, at least one of the layers of sandwich is supported by a filling material. By using a filling material of reasonable stiffness (comparable or larger than that of the sandwich), which presents an even surface to support the piezoelectric layer, it is ensured that any force applied to the encapsulation will result in stress upon the piezo electric material, which is trapped between the force exerting object and the filling material, as between hammer and anvil.

As filling material, for example, a hardening plastic in which the information carrying means are casted may be used, or a hardening foam injected to fill any space between the layers.

To keep the coupling between the electrodes and the destruction means from being tampered with externally, an embodiment of the device according to the invention is characterized, in that at least one of the layers of sandwich is partly folded back upon itself, so that parts of both of its electrodes are exposed on the inside of the encapsulation, the electric field being coupled to the destruction means via the parts exposed on the inside of the encapsulation.

Another embodiment of the device according to the invention, wherein the information carrying means are provided on a circuit carrier and are coupled via the circuit carrier to connection means on the circuit carrier is characterized in that the layer of sandwich encloses the information carrying means, but not the connection means, the sandwich being fixed to the information carrier at least between the information carrying means and the connection means. The circuit carrier may be an integrated semiconductor circuit or a printed circuit board. The connection means may be bond pads or pins, jumpers, connectors or any suitable arrangements of conductors. In this embodiment the circuit carrier combines convenience of handling with protection against external access to secure information.

An embodiment of the device according to the invention is characterized in that it comprises short circuit detection means inside the encapsulation, for detecting a short circuit between the two electrodes of the sandwich, and for in response thereto destroying the secure information. Since the electrodes are available for determining the electric field anyway, this affords an additional protection, which is activated as the sandwich is pierced, at little extra cost.

A further embodiment of the device according to the invention is characterized, in that the destruction means comprise filtering means, for preventing destruction of the secure information when a rate of the change is below a predetermined threshold rate. By filtering out slow changes, harmless deformations, such as caused by gradual temperature changes, or intrinsic temperature dependencies of the piezo electric material, can be prevented from causing the secure information from being destroyed unnecessarily.

A further embodiment of the device according to the invention is characterized, in that the secure information is stored in volatile memory means, the destruction means comprising an interruption circuit, for, in response to the change in the electric field, interrupting a power supply to the volatile memory means. The volatile memory means may be, for example, a RAM. This embodiment has the additional advantage that no internal power supply is needed for assured protection: if the external and only power supply is present, any destruction means remain active, but when the external power supply is removed, the RAMs fail anyway.

An embodiment of the invention is characterized, in that the secure information is stored in writable non-volatile memory means, the destruction means comprising an erasing means, for in response to the change in the electric field, erasing a content of the non-volatile memory means. Non-volatile memory means include PROMs, magnetic disks, by actively erasing or overwriting secure information such information can be made inaccessible. Preferably, to ensure protection, the device should comprise a power supply for the destruction means within the encapsulation.

The invention will be exemplified using a number of Figures of which

Figure 1 shows a schematic diagram of a device which is protected against mechanical access

Figure 2 shows a crosssection of a device with a piezo electric encapsulation according to the invention

Figure 2a shows another crosssection of a device with a piezo electric material according to the invention

Figures 3a, 3b, 3c show alternative encapsulations

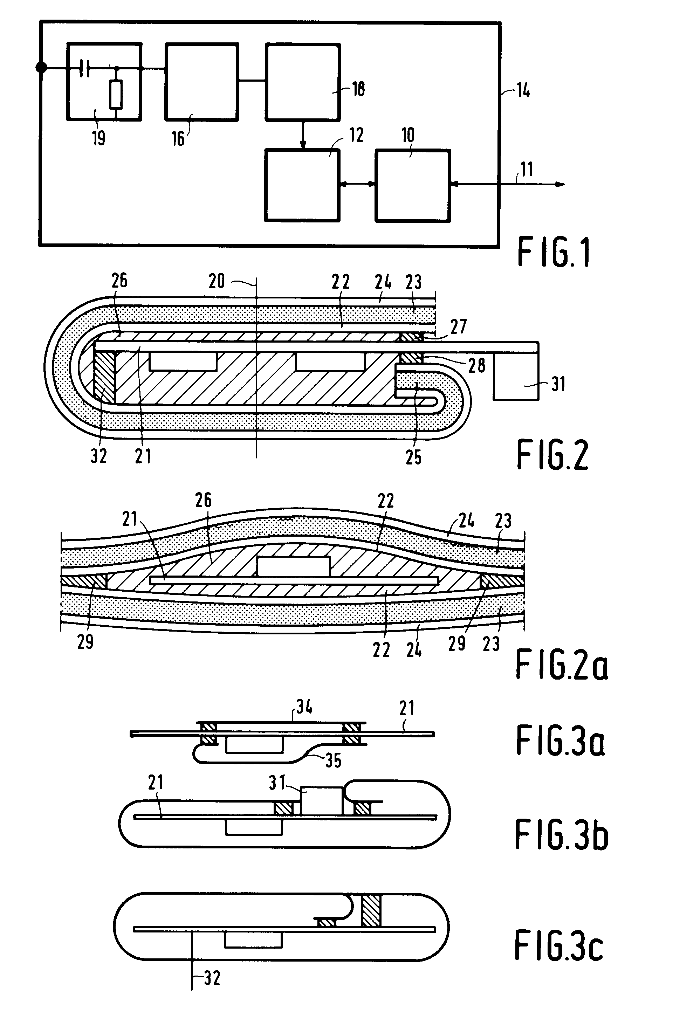

Figure 1, shows schematically an example of a device with protection of information against unauthorized external access. For its normal functioning the device in the example comprises a processor 10, which communicates with the outside world via a link 11. To perform its task, the processor 10 has access to a memory 12, which contains secure information, such as for example a decryption key, which for example enables the processor to authenticate messages, such as messages ordering cash transfers, sent to the outside. By encrypting such information with a key which is only known to the device, the device can prove its identity. The decryption key can also be used to decrypt messages intended only for the present device, arriving via the link 11. For secure operation, the processor 10 should use the decryption key from the memory 12, but it should not pass this information outside the encapsulation 14, because this would enable others to use the key.

It will be clear that the above is not intended to be restrictive: other configurations and applications are also possible. For example, the link 11 may use wires, or it may wireless, using electric or magnetic fields. The secure information may be an encryption key, but other examples of secure information include proprietary computer programs. Such secure information, moreover, need not be stored in a memory; it may be represented in any form, such as dedicated circuits, programmed fuses etcetera.

Although the processor 10 will not reveal the secure information to the outside, there is still a risk that someone will open the encapsulation 14 and read the information from the connections of the memory 12 directly. To prevent the secure information from being revealed in this way, the device according to the invention comprises monitoring means 16, which measure a voltage induced by stress upon a piezo electric material in the encapsulation 14. The monitoring means 16 activate destruction means 18 when it is detected that the encapsulation 14 is being stressed in an attempt to access the secure information. The destruction means may, for example, generate a reset signal. Or, when the memory 12 is a volatile memory, the destruction of the information may for example be achieved by interrupting the power supply to the memory. In the case of a PROM, information in the PROM may be overwritten; a magnetic memory may be erased. In principle any way of destroying information may be used, possibly even direct application of the induced voltage.

Advantageously, the monitoring means respond only to sudden changes in the physical properties, so as to exclude slow changes, such as those due, for example, to ambient or circuit temperature changes. For this purpose, a differentiating circuit 19 is included, behind which the monitoring means threshold the received voltage, the tresholded signal activating the destruction means. It will be clear that the circuit 19 and the thresholding are but an example of a monitoring circuit. If slow changes in the piezo electric voltage are not to be excluded, the differentiating circuit may be omitted; furthermore, other appropriate detection or filtering circuits may be used.

Figures 2 and 2a show crossections of an embodiment of the device according to the invention. Figure 2a corresponds to a crossection of the device along the line 20 of Figure 2 in a plane perpendicular to the plane of the drawing.

In Figure 2 the electronic circuitry 21, which may be, for example, in the form of a printed circuit board or a semiconductor chip, is partly wrapped in an encapsulation which is a sandwich of two electrodes 22, 24 with a piezo electric material 23 in between. Such sandwiches are commercially available as polymer foils with thicknesses ranging from several microns to several hundred microns, for example Kynar (TM) foil available from the Pennwalt corporation (US, Pennsylvania). With a foil the encapsulated device is very compact and easily assembled.

Any space between the electronic circuitry 21 and the sandwich is filled with a filling material 26, for example a hardening foam injected into this space. Alternatively the circuitry may be casted, for example in a hardening plastic, the casting serving to even out any unevenness in the surface of the circuitry, before it is packaged in the sandwich. The filling material 26 supports the sandwich and acts as an anvil, converting any force exerted from outside the encapsulation into stress upon the piezoelectric layer 23. The filling 26 material may be mechanically connected everywhere to the the sandwich, using some glue, but it suffices that the sandwich is connected at its ends. The filling material 26 may also be used to isolate the electronic circuit 21 electrically from the inner electrode 22. However, usually electronic circuits 21 will have their own protective isolation layer.

The parts of the electronic circuit 21 which have to be protected against external access are in the part of the circuit covered by the sandwich. Any external connections of the circuit 21, such as for example connectors 31, or jumper pins in the case of a printed circuit board, and bond pads in the case of a semiconductor chip, are in the part of the electronic circuit 21 that is not covered by the sandwich.

In Figure 2, a part of the sandwich 25 is folded back upon itself so as to expose the outside electrode 24 also on the inside of the encapsulation. In this way both the inner electrode 22 and the outer electrode 24 can be coupled electrically to the electronic circuitry, for example by solder joints 27, 28. The solder joints may be provided using a conducting paste which hardens upon treatment. In Figure 2, the solder joints 27, 28 serve to connect the sandwich to the circuitry both mechanically and electrically, but these functions may also be separated, providing the electric connection 32 between the sandwich and the electronic ciruitry anywhere inside the encapsulation where this is convenient instead of at the place 27 of the mechanical connection.

In the perpendicular crossection of Figure 2a the ends 29 of the sandwich are connected, for example by using some cementing material.

It will be understood that Figures 2 and 2a show only one embodiment of the encapsulation. Various other embodiments are possible as illustrated by Figures 3a, 3b, 3c.

For example in Figure 3a, the sandwich is provided only to patches of the electronic circuitry 21, that is, not extending around the edges of the circuitry, but only covering such patches 34, 35 as are necessary for protection. The patches of sandwich should preferably be provided on both sides of the electronic circuitry, both sides being partly folded back to expose the outer electrode, and having their electrodes coupled to the electronic circuitry.

Furthermore as in Figure 3b, when the sandwich is wrapped around the electronic circuitry, the opening for the connector need not be at the end of the circuitry: the sandwich may be wrapped around both sides of the circuitry 21, having solder joints 27, 28 on one side and leaving a patch for the connector 31 between the two solder joints on one side.

Alternatively in Figure 3c, the sandwich may be wrapped around the entire electronic circuitry, any external coupling to the circuitry being provided by wires led through holes 32 in the sandwich, or by magnetic, radiative or any other type of coupling.

Furthermore, the invention is by no means restricted to a single layer of sandwiched electrodes 22, 24 and piezoelectric material 23. Multiple stacked layers may also be used, and provide increased protection against access (more layers need to be breached) and/or increased sensitivity (for example by connecting the induced voltages in serial).

To save space, or to increase the sensitivity to deformation, it is furthermore possible to integrate one half of the encapsulation with an electronic circuit board on which the electronic circuitry 21 is implemented.

**Claims**

1. Device with protection against external access to secure information carried in information carrying means comprised in the device, the information carrying means being contained inside an encapsulation, the encapsulation being coupled to destruction means inside the encapsulation, for, in response to a change in a physical property of the encapsulation, controlling the information carrying means to destroy the secure information, characterized, in that the encapsulation contains a piezo electric material, the physical property being an electric field across said piezoelectric material.

2. Device according to Claim 1, characterized, in that the encapsulation comprises at least two layers of sandwich each comprising two electrodes with the piezoelectric material in between, the information carrying means and the destruction means being contained between the two layers of sandwich.

3. Device according to Claim 2, characterized, in that, inside the encapsulation, at least one of the layers of sandwich is supported by a filling material.

4. Device according to Claim 2 or 3, characterized, in that at least one of the layers of sandwich is partly folded back upon itself, so that parts of both of its electrodes are exposed on the inside of the encapsulation, the electric field being coupled to the destruction means via the parts exposed on the inside of the encapsulation.

5. Device according to Claim 2, 3 or 4, wherein the information carrying means are provided on a circuit carrier and are coupled via the circuit carrier to connection means on the circuit carrier, characterized, in that the layer of sandwich encloses the information carrying means, but not the connection means, the sandwich being fixed to the information carrier at least between the information carrying means and the connection means.

6. Device according to any one of the Claims 2 to 5, characterized, in that it comprises short circuit detection means inside the encapsulation, for detecting a short circuit between the two electrodes of the sandwich, and for in response thereto destroying the secure information.

7. Device according to any one of the Claims 1 to 6, characterized, in that the destruction means comprise filtering means, for preventing destruction of the secure information when a rate of the change is below a predetermined threshold rate.

8. Device according to any one of the Claims 1 to 7, characterized, in that the secure information is stored in volatile memory means, the destruction means comprising an interruption circuit, for, in response to the change in the electric field, interrupting a power supply to the volatile memory means.

9. Device according to any one of the Claims 1 to 7, characterized, in that the secure information is stored in writable non-volatile memory means, the destruction means comprising an erasing means, for in response to the change in the electric field, erasing a content of the non-volatile memory means.

FIG.1

FIG.2

FIG.2a

FIG.3a

FIG.3b

FIG.3c